Europäisches Patentamt

European Patent Office

Office européen des brevets

(11) Veröffentlichungsnummer: **0 387 242**
A1

# EUROPÄISCHE PATENTANMELDUNG

(21) Anmeldenummer: 90890065.7

(22) Anmeldetag: 08.03.90

(51) Int. Cl.⁵: **B65G 15/64**

(30) Priorität: 09.03.89 AT 548/89

(43) Veröffentlichungstag der Anmeldung:
12.09.90 Patentblatt 90/37

(84) Benannte Vertragsstaaten:
BE CH DE DK ES FR GB IT LI NL SE

(71) Anmelder: IFE Industrie-Einrichtungen
Fertigungs-Aktiengesellschaft
Patertal 20
A-3340 Waidhofen a.d. Ybbs(AT)

(72) Erfinder: Ahorner, Leander
Bertastrasse 33/2
A-3340 Waidhofen a.d. Ybbs(AT)
Erfinder: Hackl, Friedrich
Ybbsstrasse 19
A-3300 Amstetten(AT)

(74) Vertreter: Barger, Werner, Dipl.-Ing. et al
Patentanwälte Diplomingenieure Erich
Barger, Hermann Krick, Werner Barger
Biberstrasse 15
A-1010 Wien(AT)

(54) **Bandlauf-Regeleinrichtung.**

(57) Die Erfindung betrifft eine Regeleinrichtung für den Bandlauf eines kurzen und/oder unelastischen Bandes, das über zwei Umlenkwalzen (4) und gegebenenfalls Stützrollen umlauft.

Erfindungsgemäß ist zum verhindern des Verlaufens des Bandes vorgesehen, daß zumindest eine der beiden Umlenkwalzen (4) zumindest annähernd in einer Ebene verschwenkbar ist, die zumindest annähernd senkrecht auf die Hauptbewegungsrichtung des bewegten Bandes liegt.

Bevorzugt ist die bewegliche Walze (4) mit ihrem einen Achsstummel in einem sphärischen Lager ortsfest gelagert und das andere Lager (26) in der Ebene senkrecht auf die Förderrichtung beweglich.

Die Verschwenkung der Walze bzw. des Lagers wird von einer elektronischen Regeleinrichtung (24) gesteuert, die von Sensoren (21, 22) Informationen über die momentane Bandlage (Q) erhält.

Fig.3

EP 0 387 242 A1

# Bandlauf-Regeleinrichtung

Die Erfindung betrifft eine Regeleinrichtung für den Bandlauf kurzer und/oder unelastischer Bänder.

Üblicherweise werden Bänder aller Art, z.Bsp. Förderbänder, während ihres Laufes dadurch in ihrer richtigen Lage auf den Stützrollen gehalten, daß eine oder beide Endrollen eine ballige Oberfläche aufweisen, wodurch im Band Spannungen und elastische Deformationen entstehen, die im Band Kräfte quer zur Laufrichtung aufbauen, die es immer symmetrisch zur dicksten Stelle der Walze laufen lassen und die Rückstellkräfte genannt werden.

Das versagt bei kurzen und/oder unelastischen Bändern. Bei kurzen Bändern, weil der Auspendelweg, bevor es zu einer nennenswerten Rückstellkraft kommt, viel zu lang ist und bei unelastischen Bändern, weil diese auch bei extrem schwachballig geschliffener Walzenoberfläche zufolge ihrer Materialeigenschaft an der dicksten Stelle der Walze in einem relativ schmalen Bereich gespannt laufen, an den Rändern aber flattern und nicht aufliegen. Es tritt daher auch bei unelastischen Bändern beim Verlaufen aus dem gewünschten Bereich keine genügend große Rückstellkraft ein.

Derartige kurze und/oder unelastische Bänder sind bei der Gesteins- oder Erzaufbereitung in Verwendung, treten aber auch in allen anderen Bereichen der Fördertechnik auf. Ein Beispiel für unelastische Bänder sind teflonbeschichtete Glasfaserbänder, wie sie bei Magnetabscheidern verwendet werden. Bei solchen Abscheidern wird eine Rolle aus oder unter Verwendung von extrem stark permanent-magnetischem Material hergestellt und das gemahlene Gestein vom Band über diese Rolle bewegt.

Partikel mit einem gewissen magnetischen Verhalten werden von der magnetischen Rolle durch das dünne Band hindurch so stark angezogen, daß sie dem Band bis zu 180° um die Rolle folgen und sodann in einer Richtung annä hernd entgegengesetzt zur ursprünglchen Transportrichtung vor dem Erreichen der Trommel abgeschleudert werden, während unmagnetische Partikel das Förderband in etwa in Richtung der ursprünglichen Bandrichtung bei der Trommel verlassen.

Es ist klar, daß die Magnetkraft durch das Band geschwächt wird, und zwar einerseits in Abhängigkeit vom Material des Bandes, andererseits quadratisch zu dessen Dicke, da der Abstand zwischen dem magnetischen Rollenmaterial und dem Gestein vergrößert wird. Aus diesem Grund werden spezielle, extrem dünne Bänder aus Glasfasergewebe verwendet, die aus Reibungs- und Staubdurchlässigkeitsgründen an ihrer Außenseite teflonbeschichtet sind. Derartige Bänder sind extrem unelastisch, und der Lauf solcher Bänder ist auf übliche Weise nicht zufriedenstellend beherrschbar.

Es gibt selbstverständlich auch andere Bandmaterialien, deren Elastizitätseigenschaften einen befriedigenden Lauf nicht zulassen.

Die Erfindung hat sich zum Ziel gemacht, diese Schwierigkeiten zu beseitigen und eine Regeleinrichtung anzugeben, durch die es möglich ist, derartige kurze und/oder unelastische Bänder zuverlässig an der dafür vorgesehenen Stelle der Walzen laufen zu lassen.

Erfindungsgemäß ist dazu vorgesehen, daß eine der beiden Umlenkwalzen in einer Ebene verschwenkbar ist, die zumindest annähernd senkrecht auf die Hauptförderrichtung des auf dem bewegten Band liegenden Fördergutes liegt.

Es werden somit bei dieser Verschwenkung die normalerweise zueinander parallelen Achsen der beiden Umlenkrollen aus ihrer parallelen Lage gebracht, wobei die Lageänderung vorzugsweise so erfolgt, daß die dabei auftretende minimale Abstandsänderung der äussersten Punkte der beiden Achsen zumindest annähernd gleich groß ist. Liegen beide Achsen beispielsweise ursprünglich in einer horizontalen Ebene, so kann die bewegliche Achse zur Regelung des Bandlaufes auf einer Seite gehoben und auf der anderen gesenkt werden.

In einer meist ausreichenden Variante die konstruktiv einfacher ist, ist vorgesehen, die bewegliche Achse mit ihrem einen Achsstummel in einem sphärischen Lager ortsfest zu lagern und das andere Lager in der Ebene senkrecht auf die Förderrichtung zu bewegen.

Die erfindungsgemäße Maßnahme bewirkt, daß das Band über die bewegliche Rolle schräg läuft, wodurch eine merkliche Querkraft auftritt. Durch die Art des Verschwenkens der Walzenachse tritt jedoch praktisch keine Zugbeanspruchung, vor allem aber keine unterschiedliche Zugbeanspruchung über die Walzenbreite auf, so daß das Band weder in Rißgefahr ist, noch Gefahr läuft, sich zu verwerfen oder zu schlottern.

Um diese Querkraft als Rückstellkraft verwenden zu können, ist es notwendig, die Verschwenkung der Walzenachse von der momentanen Lage des Bandes abhängig zu machen. Um dieses Ziel zu erreichen, gibt es eine ganze Reihe von Möglichkeiten.

So kann beispielsweise das Band über seine Länge mit einem Metallstreifen versehen sein, der entweder miteingewebt ist oder bei der Beschichtung mitaufgebracht wird oder nach der Beschichtung passend am Band montiert wird. Dabei ist es möglich, daß dieser schmale Metallstreifen auch die Form diskreter Metallplättchen annimmt, die einzeln auf das Band aufgebracht sind.

Es ist beispielsweise mit Hilfe zweier induktiver Aufnehmer (Abstandssensoren) leicht möglich, festzustellen, wie das Band läuft und auch ob es momentan verläuft. Mittels eines Mikroprozessors oder auch nur mittels geeigneter Relais kann dann die Verstellung der beweglichen Walze gesteuert werden.

Dieses Verschwenken geschieht vorzugsweise mittels eines elektrischen Linearantriebes, beispielsweise eines Schubspindelantriebes, und einer passenden Führung des Walzenlagers in einer Kulisse.

Es ist selbstverständlich auch möglich, das Verlaufen des Bandes optisch mittels eines Lichtstrahls und eines Fotosensors festzustellen oder auch durch berührende Meßfühler, die passend neben der "richtigen" Laufbahn des Bandes angebracht sind. Es ist bei der Wahl dieser Meßorgane auf den jeweiligen Einsatz des Bandes Bedacht zu nehmen, besonders im Hinblick auf magnetische Eigenschaften des Gutes, auf die drohende Verschmutzung, auf Erschütterung, etc.

Die Regelung des Verschwenkens der Walze kann nach den allgemeinen Regeln der Regeltechnik erfolgen, wobei von einer einfachen Zweipunktregelung bis zu aufwendigen Regelmodellen alle Varianten denkbar und dem Regelungsfachmann bekannt und geläufig sind. Es hat sich aber gezeigt, daß schon relativ einfache Regelmodelle, etwa die Zweipunktregelung, befriedigende Ergebnisse liefern.

In der Zeichnung wird die Erfindung näher erläutert. Dabei zeigt

die Fig. 1 eine Seitenansicht eines Bandes mit der erfindungsgemäßen Bandlaufregeleinrichtung,

die Fig. 2 eine Ansicht gemäß des Schnittes II-II in Fig. 1,

die Fig. 3 ein Schema für eine Ausbildungsform der erfindungsgemäßen Regeleinrichtung mit zwei Sensoren.

An einem zweiteiligen Fundament 1, 2 ist eine angetriebene, feste Walze 3 und eine nichtangetriebene, bewegliche Walze 4 gelagert.

Die Lagerung der Walze 3 erfolgt dabei über einen Zugstab 5 und Haltelaschen 6.

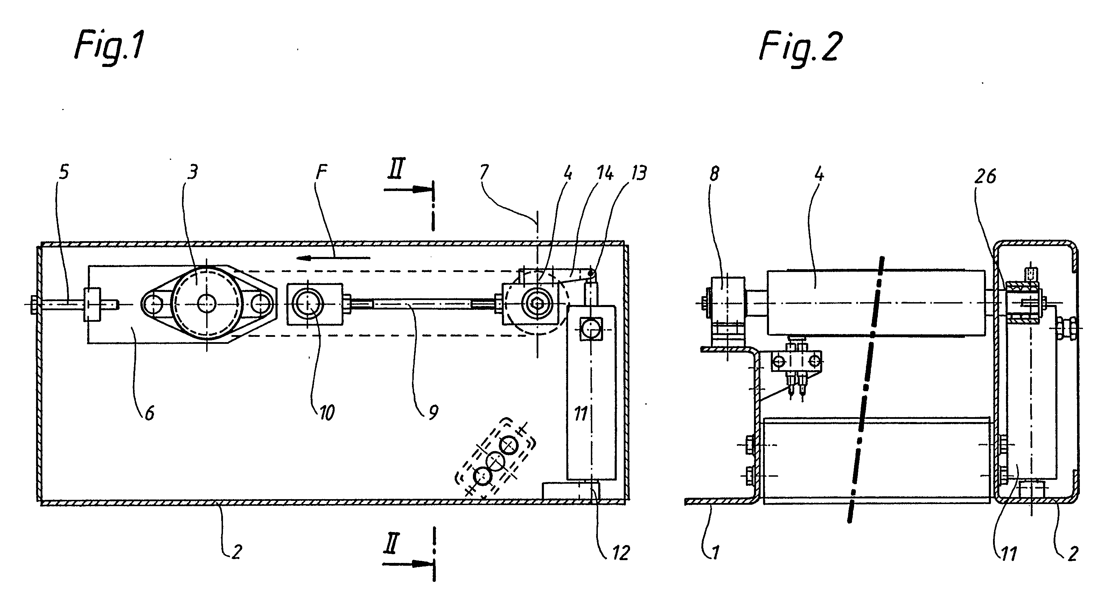

Die nichtangetriebene Rolle 4, die erfindungsgemäß in einer Ebene 7 (in Fig. 2 der Zeichenblattebene entsprechend), die zumindest annähernd senkrecht auf die Förderrichtung F verschwenkbar ist, ist folgendermaßen gelagert:

Das am Fundament 1 vorgesehene Lager 8 ist ein sphärisches Lager, d.h. es erlaubt das Verschwenken der Achse der Rolle 4 um den Lagermittelpunkt in einem gewissen Ausmaß. Das andere Lager 26 im Fundament 2, ist an einem Schwenkarm 9 geführt, der im Fundament 2 um eine Achse 10 verdrehbar ist. Die Verschwenkung selbst erfolgt mittels eines elektrischen Linearantriebes 11, durch den die Länge zwischen den Aufhängepunkten 12 und 13 des elektrischen Linearantriebes verstellt werden kann. Der Aufhängepunkt 13 ist mit einem Arm 14 mit dem Lagergehäuse des verschwenkbaren Lagers fest verbunden.

Es wird auf diese Weise kostengünstig und robust ein Verschwenken der Achse der Walze 4 bezüglich der Achse der Walze 3 erreicht. Es spielt bei entsprechender Länge des Schwenkarmes 9 keine Rolle, daß die Bewegung der Achse nicht exakt in einer Ebene senkrecht zur Förderrichtung F erfolgt, sondern entlang eines Kegelmantels mit der Spitze im Lager 8.

Es kann selbstverständlich an Stelle des Gelenkarmes 9 auch eine entsprechende Kulisse im Fundament 2 vorgesehen sein und es kann bei besonders diffizilen Anwendungen eine analoge Vorrichtung symmetrisch zur geschilderten an Stelle des Lagers 8 angeordnet werden. Durch eine solche Ausbildung wird zuverlässig erreicht, daß die Walze 4 exakt um ihre axiale Mitte und exakt in einer Ebene senkrecht auf die Förderrichtung F verschwenkt wird.

Die Betätigung des elektrischen Linearantriebes 11, der selbstverständlich auch durch andere Antriebe ersetzt werden kann, bevorzugt aber ein Schubspindelantrieb ist, erfolgt in folgender Weise:

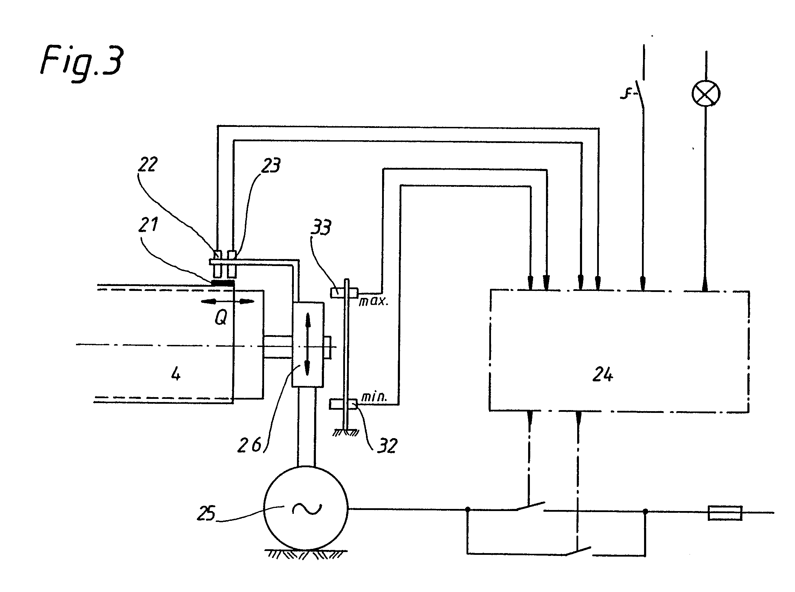

Am Rand des Förderbandes ist ein kontinuierlicher oder diskontinuierlicher Metallstreifen 21 vorgesehen. Bei normalem Lauf des Förderbandes an der richtigen Stelle befindet sich dieser Metallstreifen im Bereich zweier Annäherungsdetektoren 22, 23. Mit einem Doppelpfeil ist in Fig. 3 die mögliche Querbewegung Q des Bandes eingezeichnet. Läuft das Band in einer der beiden möglichen Richtungen über ein gewisses Ausmaß aus seiner Normallage, entfernt es sich von einem der beiden Detektoren. Dieser Detektor gibt ein entsprechendes Signal an die elektronische Bandregeleinrichtung 24, die in Abhängigkeit vom empfangenen Signal den Linearantrieb 25 so in Betrieb nimmt, daß das Verstellager 26 der Rolle 4 um einen vorbestimmten Abstand auf- oder abbewegt wird und speichert, daß das System in Rückstellphase ist.

Als Ergebnis dieser Verschwenkung der Achse der Rolle 4 läuft das Band schräg über die Rolle 4, wodurch ihm eine Querkraft erteilt wird, durch die es entgegen der ursprünglichen Auslaufrichtung wieder in den gewünschten korrekten Bandbereich einläuft. Diese Rückkehr in die normale Lage wird vom Detektor, der zuerst das Entfernen des Metallstreifens festgestellt hat, wieder registriert, und ein entsprechender Impuls wird erneut an die elektronische Bandregeleinrichtung 24 gesandt. Da diese nach wie vor in Rückstellphase ist, reagiert sie auf diesen neuen Impuls dadurch, daß sie die vorgenommene Bewegung des Motors 25 und damit des Lagers 26 um einen vorbestimmten Schritt zurücknimmt. Dieser Rücknahmeschritt ist kleiner als der zuerst vorgenommene.

Je nachdem, ob dieser Rücknahmeschritt zu groß, gerade richtig oder zu klein war, um das richtige Weiterlaufen des Bandes zu bewirken, beginnt das Spiel von neuem oder das Band bleibt bis zum Eintreten einer Störung durch aufgebrachtes Ladegut etc. in seiner richtigen Lage, oder der andere Detektor stellt fest, daß sich der Metallstreifen von ihm entfernt hat.

Auf diese Weise erfolgt das Hin- und Herpendeln des Förderbandes durch die erfindungsgemäße Bandregeleinrichtung.

Bei der dargestellten Einrichtung sind auch zwei Sensoren 32, 33 vorgesehen, die die jeweiligen Endanschläge der vertikalen Bewegung des Lagers 26 feststellen. Wenn beim Erreichen eines dieser Anschläge das Förderband entweder nach einer vorbestimmten Zeit nicht in seine Normallage zurückgekehrt ist oder der Metallstreifen auch aus dem Bereich des zweiten der beiden Detektoren 22, 23 gelaufen ist, stellt die elektronische Bandregeleinrichtung den Antrieb an der Antriebsrolle 3 ab und es ergeht eine Störmeldung an eine Überwachungswarte, die auch mit einer optischen oder akustischen Anzeige an der Maschine selbst gekoppelt sein kann. Es ist selbstverständlich möglich, mit einer solchen Störmeldung auch die Gutzufuhr zu stoppen und andere sicherheitstechnische Vorkehrungen zu treffen.

Es ist weiters möglich, an Stelle der Regelung des Motors 25 mit zwei vorgegebenen Schritten auch eine Zweipunktschaltung zu betreiben oder diese Schaltung durch Anordnung weiterer, in Richtung der Rollenachse versetzter Bandlaufüberwachungsdetektoren zu verfeinern.

**Ansprüche**

1. Regeleinrichtung für den Bandlauf eines kurzen und/oder unelastischen Bandes, das über zwei Umlenkwalzen und gegebenenfalls Stützrollen umlauft, wobei zumindest eine der beiden Umlenkwalzen verschwenkbar ist, dadurch gekennzeichnet, daß die Verschwenkung zumindest annähernd in einer Ebene (7) erfolgt, die zumindest annähernd senkrecht auf die Hauptbewegungsrichtung (F) des bewegten Bandes liegt.

2. Regeleinrichtung nach Anspruch 1, dadurch gekennzeichnet, daß die Verschwenkung der Umlenkwalze (4) um eine zumindest annähernd in Walzenmitte liegende Achse erfolgt.

3. Regeleinrichtung nach Anspruch 1, dadurch gekennzeichnet, daß die bewegliche Walze (4) mit ihrem einen Achsstummel in einem sphärischen Lager ortsfest gelagert und das andere Lager in der Ebene (7) senkrecht auf die Förderrichtung beweglich ist.

4. Regeleinrichtung nach Anspruch 1, dadurch gekennzeichnet, daß das Verschwenken der Umlenkwalze (4) mittels eines elektrischen Linearantriebes, beispielsweise eines Schubspindelantriebes, erfolgt.

5. Regeleinrichtung nach einem der Ansprüche 1 bis 4, dadurch gekennzeichnet, daß an sich bekannte optische oder induktive Sensoren (22, 23) den Bandlauf überwachen und beim feststellen einer Abweichung ein entsprechendes Signal an eine Regeleinrichtung (24) geben, die die Verschwenkung der Umlenkwalze (4) über einen Antrieb (25) bewirkt.

6. Regeleinrichtung nach Anspruch 5, dadurch gekennzeichnet, daß Sensoren (32, 33) das Erreichen der maximalen Umlenkwalzenverschwenkung feststellen und ein entsprechendes Signal an die Regeleinrichtung (24) geben, um es dieser zu ermöglichen, gegebenenfalls nach Kontrolle weiterer Betriebszustände, eine Störmeldung abzugeben.

7. Regeleinrichtung nach einem der Ansprüche 5 oder 6, dadurch gekennzeichnet, daß die Regelung der Walzenverschwenkung, wie an sich bekannt, als Zweipunkt-Regelung erfolgt.

8. Regeleinrichtung nach einem der Ansprüche 5 oder 6, dadurch gekennzeichnet, daß die Regeleinrichtung beim Erhalt des Signales vom Sensor (22, 23), das das Abweichen des Bandes mitteilt, die Walze (4) um einen vorbestimmten Winkel verschwenkt und nach Erhalt eines Signales des Sensors (22, 23), das das Rückkehren des Bandes mitteilt, die Walze um einen vorbestimmten Winkel, der kleiner ist als der erste Winkel, zurückschwenkt.

9. Regeleinrichtung nach Anspruch 6, dadurch gekennzeichnet, daß die Regeleinrichtung den Antriebsmotor für das Band abschaltet, wenn einer der Sensoren (32, 33) das Erreichen des maximalen Verschwenkens meldet und während einer vorgegebenen Zeit keiner der Sensoren (22, 23) die Rückkehr des Bandes in die richtige Lage meldet.

**Fig.1**

**Fig.2**

Fig.3

max.

min.

33

32

23

22

21

Q

24

26

25

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-B-2062324 (RICOH)<br>* Spalte 3, Zeilen 10 - 23; Figuren 1-20 *<br>--- | 1, 2 | B65G15/64 |
| A | DE-U-1860060 (SIEMENS-SCHUCKERTWERKE)<br>* das ganze Dokument *<br>--- | 1-5 | |
| A | DE-U-1972473 (LICENTIA)<br>* Seite 3, Zeile 14 - Seite 4, Zeile 5; Figur 1 *<br>--- | 1 | |
| A | DE-U-1947965 (GEBR. EICKHOFF)<br>* Seite 1, Zeilen 16 - 28 *<br>----- | 9 | |

**RECHERCHIERTE SACHGEBIETE (Int. Cl.5 )**

B65G

Der vorliegende Recherchenbericht wurde für alle Patentansprüche erstellt

| Recherchenort | Abschlußdatum der Recherche | Prüfer |
|---|---|---|
| BERLIN | 05 JUNI 1990 | SIMON, J |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................................................
& : Mitglied der gleichen Patentfamilie, übereinstimmendes Dokument